# EUROPÄISCHE PATENTANMELDUNG

(11) **EP 3 061 879 A1**
(43) Veröffentlichungstag der Anmeldung: **31.08.2016**
(21) Anmeldenummer: 16155423.3
(22) Anmeldetag: 12.02.2016
(51) Int. Cl.: E03F 5/14, E02B 8/02

(54) **VORRICHTUNG ZUM ABSCHEIDEN UND ENTFERNEN VON SIEBGUT AUS EINER MIT SIEBGUT VERUNREINIGTEN STRÖMENDEN FLÜSSIGKEIT**

(30) Priorität: 27.02.2015 DE 102015102817
(71) Anmelder: Huber SE, 92334 Berching (DE)
(72) Erfinder: Spenger, Franz, 91187 Röttenbach (DE); Brüderl, Christian, 85132 Schernfeld (DE); Breinl, Christian, 92334 Berching (DE)
(74) Vertreter: Baudler, Ron

(57) **Zusammenfassung**

Die Erfindung betrifft eine Vorrichtung zum Abscheiden und Entfernen von Siebgut (1) aus einer mit Siebgut (1) verunreinigten strömenden Flüssigkeit, beispielsweise Abwasser (2), wobei die Vorrichtung einen an einem Gestell (3) fixierten und eine Siebfläche bildenden Siebrost (4) mit nebeneinander angeordneten und voneinander beabstandeten Roststäben (5) aufweist, wobei die Vorrichtung zumindest eine Reinigungsharke (6) mit einer Vielzahl von Reinigungszinken (7) umfasst, die mit Hilfe eines Antriebs (8) derart in einer Förderrichtung (F) entlang des Siebrosts (4) bewegbar ist, dass die Reinigungszinken (7) beim Passieren des Siebrosts (4) zumindest abschnittsweise zwischen benachbarte Roststäbe (5) eingreifen, um vom Siebrost (4) zurückgehaltenes Siebgut (1) von diesem zu entfernen und in Richtung eines Austrags (9) der Vorrichtung zu fördern. Erfindungsgemäß wird vorgeschlagen, dass die Reinigungszinken (7) derart gelagert sind, dass sie bezogen auf die genannte Förderrichtung und mit Blick auf den Siebrost seitlich hin und her bewegbar sind.

## Beschreibung

Die vorliegende Erfindung betrifft eine Vorrichtung zum Abscheiden und Entfernen von Siebgut aus einer mit Siebgut verunreinigten strömenden Flüssigkeit, beispielsweise Abwasser, wobei die Vorrichtung einen an einem Gestell fixierten und eine Siebfläche bildenden Siebrost mit nebeneinander angeordneten und voneinander beabstandeten Roststäben aufweist, wobei die Vorrichtung zumindest eine Reinigungsharke mit einer Vielzahl von Reinigungszinken umfasst, die mit Hilfe eines Antriebs derart in einer Förderrichtung entlang des Siebrosts bewegbar ist, dass die Reinigungszinken beim Passieren des Siebrosts zumindest abschnittsweise zwischen benachbarte Roststäbe eingreifen, um vom Siebrost zurückgehaltenes Siebgut von diesem zu entfernen und in Richtung eines Austrags der Vorrichtung zu fördern.

Derartige Siebvorrichtungen sind im Stand der Technik hinlänglich bekannt und dienen beispielsweise der Entfernung von grobem Siebgut (Holz, Steine, etc.) aus einem in einem Abwasserkanal fließenden Abwasser. Die Siebvorrichtung wird hierzu in der Regel derart in den Abwasserkanal integriert, dass sich die Siebfläche, ausgehend von der Kanalsohle, senkrecht oder leicht geneigt nach oben erstreckt. Um einen Austrag des von dem die Siebfläche bildenden Siebrost zurückgehaltenen Siebguts zu ermöglichen, erstreckt sich die Siebfläche meist über den maximal zu erwartenden Wasserspiegel.

Durch einen Umlaufbetrieb der Reinigungsharke (von der auch mehrere vorhanden sein können) wird schließlich das Siebgut an der Siebfläche entlang nach oben in Richtung eines Austrags gefördert und dort, beispielsweise mit Hilfe eines Abstreifers, von der Reinigungsharke entfernt.

Eine Schwierigkeit bei der Konstruktion entsprechender Vorrichtungen (im Folgenden auch als "Rechen" bezeichnet) liegt darin, die Reinigungsharke derart zu lagern, dass sie sich beim Passieren der Siebfläche möglichst parallel zur Längsausrichtung der Roststäbe bewegt, um ein Verkanten der Reinigungsharke zu vermeiden. Aufgrund vorhandener Fertigungstoleranzen ist dies jedoch nicht immer problemlos zu realisieren.

Aufgabe der vorliegenden Erfindung ist es daher, diese Tatsache zu berücksichtigen und einen Rechen vorzuschlagen, bei dem das genannte Verkanten vermieden wird.

Die Aufgabe wird gelöst durch eine Vorrichtung mit den Merkmalen von Anspruch 1.

Zunächst besitzt die beanspruchte Vorrichtung, wie im Stand der Technik üblich, einen an einem Gestell (z. B. in Form eines auf einer Stellfläche befestigten Rahmenelements) fixierten und eine Siebfläche bildenden Siebrost mit nebeneinander angeordneten und (wenige Millimeter bis wenige Zentimeter) voneinander beabstandeten Roststäben. Ferner ist wenigstens eine Reinigungsharke mit einer Vielzahl von, vorzugsweise benachbart zueinander angeordneten, Reinigungszinken vorhanden, die mit Hilfe eines Antriebs derart in einer Förderrichtung entlang des Siebrosts bewegbar ist, dass die Reinigungszinken beim Passieren des Siebrosts zumindest abschnittsweise zwischen benachbarte Roststäbe eingreifen. Hierdurch wird das von den Roststäben zurückgehaltene Siebgut erfasst und vom Siebrost entfernt.

An dieser Stelle sei darauf hingewiesen, dass im Folgenden in der Regel nur von einer Reinigungsharke die Rede ist. Selbstverständlich kann der Rechen auch mehrere in Förderrichtung zueinander beabstandete Reinigungsharken umfassen. Ebenso können zusätzliche Reinigungslippen und/oder Reinigungsbürsten vorhanden sein, die mit Hilfe des genannten Antriebs an der Siebfläche vorbeiführbar sind.

Um nun ein Verkanten zwischen der sich entlang des Siebrosts bewegenden Reinigungsharke und dem Siebrost selbst zu verhindern, ist nun erfindungsgemäß vorgesehen, dass die Reinigungszinken der Reinigungsharke derart gelagert sind, dass sie bezogen auf die genannte Förderrichtung und mit Blick auf den Siebrost seitlich hin und her bewegbar sind. Mit anderen Worten sieht die Erfindung also vor, dass zumindest ein Teil der Reinigungszinken (vorzugsweise alle) in einer Richtung beweglich gelagert ist, die parallel zu einem flächigen Abschnitte der Siebfläche und senkrecht zur Bewegungsrichtung der Reinigungsharke verläuft, die diese während ihrer Bewegung entlang des genannten flächigen Abschnitts des Siebrosts besitzt.

Eine derartige Bewegungsfreiheit hat den Vorteil, dass die Reinigungszinken sich an den Verlauf der Roststäbe anpassen können. Sind diese nicht ganz parallel zum Förderweg der Reinigungsharke ausgerichtet, so können die Reinigungszinken dennoch den zwischen den Roststäben vorhandenen Freiräumen folgen, ohne dass es hierbei zu einem Verkanten der Reinigungszinken kommen würde.

Im Ergebnis sind die Reinigungszinken also einerseits in eine Förderrichtung und andererseits senkrecht hierzu beweglich gelagert, wobei es sich bei der Förderrichtung stets um die Richtung handelt, in der sich die Reinigungsharke während ihrer durch den Antrieb veranlassten Bewegung bewegt (die Förderrichtung muss also nicht geradlinig verlaufen).

Besondere Vorteile bringt es mit sich, wenn die Reinigungsharke beidseitig mit jeweils einem umlaufenden Zugorgan der Vorrichtung in Verbindung steht und mit Hilfe der Zugorgane, von denen wiederum eine oder beide mit dem genannten Antrieb in Wirkverbindung stehen, entlang eines endlosen Förderwegs bewegbar ist. Beispielsweise wäre es denkbar, dass die Zugorgane als endlose Ketten vorliegen, die jeweils um ein unteres und ein oberes Zahnrad verlaufen, wobei zumindest eines der genannten Zahnräder mit dem Antrieb in Wirkverbindung steht. In diesem Fall sind die Reinigungszinken schließlich auch in der genannten seitlichen Richtung relativ zu den Zugorganen beweglich gelagert.

Vorteilhaft ist es zudem, wenn die Reinigungszinken derart gelagert sind, dass sie wenigstens 0,5 mm, bevorzugt wenigstens 1 mm, besonders bevorzugt wenigstens 2 mm, seitlich bewegbar sind. Während kleinere Werte bei kürzeren Roststäben ausreichen sollten, sind größere Werte dann sinnvoll, wenn längere Roststäbe (Länge: über drei Meter) zum Einsatz kommen, da hier bereits bei einer geringen Fehlstellung der Roststäbe erhebliche seitliche Abweichungen der Solllage beobachtet werden können.

Eine Fehlstellung liegt im Rahmen der Erfindung dann vor, wenn die Roststäbe nicht vollständig parallel zur Längserstreckung der Zugorgane ausgerichtet sind, so dass sich der Abstand der einzelnen Roststäbe zu den seitlich verlaufenden Zugorganen in Längsrichtung der Roststäbe verändert. Um diese seitliche Lageabweichung zwischen den Zugorganen und den Roststäben auszugleichen, sind die Reinigungszinken schließlich seitlich beweglich gelagert, so dass deren Abstand zu den jeweiligen Zugorganen ebenfalls veränderbar ist. Die Reinigungszinken greifen somit immer in die zwischen den Roststäben vorhandenen Freiräume ein, so dass ein Verkanten der Reinigungszinken ausgeschlossen werden kann.

Die genannte seitliche Beweglichkeit kann beispielsweise dadurch realisiert sein, dass die gesamte Reinigungsharke in seitlicher Richtung beweglich an den Zugorganen gelagert ist. Besonders vorteilhaft ist es jedoch, wenn die Reinigungsharke einen Träger sowie an diesem gelagerte Reinigungszinken umfasst. Während nun der Träger beidseitig mit jeweils einem Zugorgan verbunden sein sollte, ist es von Vorteil, wenn die Reinigungszinken selbst keine direkte Verbindung mit den Zugorganen aufweisen. Sind die Reinigungszinken nun derart am Träger gelagert, dass sie in der genannten seitlichen Richtung relativ zum Träger bewegbar sind, so können die Reinigungszinken dem Verlauf der zwischen den Roststäben vorhandenen Freiräume folgen, auch wenn sich der Träger stets parallel zu den Zugorganen bewegt, während die Roststäbe eine Ausrichtung aufweisen, die leicht von einer zu den Zugorganen parallel verlaufenden Ausrichtung abweicht.

Vorteilhaft ist es also, wenn sich der Träger zwischen zwei parallel verlaufenden Zugorganen erstreckt und zwei voneinander beabstandete Seitenabschnitte aufweist, wobei jeweils ein Seitenabschnitt mit einem Zugorgan in Verbindung steht. Vorzugsweise umfasst der Träger ein längliches Grundprofil, das jeweils im Bereich einer seitlichen Stirnseite (= Seitenabschnitt) mit einem Zugorgan verbunden ist.

Ebenso ist es vorteilhaft, wenn die Reinigungszinken bezogen auf den Träger, vorzugsweise ausschließlich, linear beweglich gelagert sind. Die Reinigungszinken sind beispielsweise über eine Schiene oder mehrere kolinear verlaufende Bolzen geführt, wobei eine Relativbewegung zwischen dem Träger und den Reinigungszinken in einer senkrecht zu der genannten seitlichen Bewegungsrichtung verlaufenden Richtung unterbunden ist. In diesem Fall dient die Relativbewegung zwischen Träger und Reinigungszinken somit lediglich dem Ausgleich einer geringfügigen "Nichtparallelität" zwischen Zugorganen und Roststäben.

Besondere Vorteile bringt es mit sich, wenn die Reinigungsharke wenigstens einen, mehrere Reinigungszinken umfassenden, Reinigungskamm aufweist. Die Reinigungszinken sind in diesem Fall vorzugsweise zu einer Einheit zusammengefasst und über einen Befestigungsabschnitt des Reinigungskamms derart am Träger gelagert, dass der Reinigungskamm relativ zum Träger bewegbar ist (wobei der Träger vorzugsweise in der erfindungsgemäßen seitlichen Richtung nicht beweglich gelagert sein sollte). Vorzugsweise ist der Reinigungskamm zudem einteilig ausgebildet und/oder aus Kunststoff gefertigt. Selbstverständlich ist auch die Verwendung anderer Materialien, wie beispielsweise Metall (mit oder ohne Beschichtung), möglich.

Vorteilhaft ist es zudem, wenn der Reinigungskamm mit Hilfe von Befestigungsmitteln lösbar am Träger befestigt ist. Der Reinigungskamm kann in diesem Fall bei einem übermäßigen Verschleiß leicht ausgetauscht werden, ohne dass hierfür ein Ausbau des Trägers nötig wäre. Vorzugsweise erfolgt die Befestigung des Reinigungskamms am Träger über Schrauben.

Besonders vorteilhaft ist es, wenn der Träger und/oder der Reinigungskamm eine oder mehrere Führungen umfassen, die sicherstellen, dass zwischen Reinigungskamm und Träger ausschließlich eine geradlinige und, bezogen auf die Förderrichtung, seitliche Relativbewegung möglich ist. Um die erforderliche Relativbewegung zwischen Träger und Reinigungskamm zu ermöglichen, kann der Reinigungskamm z. B. wenigstens ein in der gewünschten Bewegungsrichtung ausgerichtetes Langloch aufweisen, in das ein Bolzen oder eine Schraube des Trägers eingreift. Die Führung sollte die Relativbewegung zudem in beide Seitenrichtungen begrenzen, um zu vermeiden, dass sich der Reinigungskamm während seiner relativ zum Träger erfolgenden Bewegung von diesem löst. Beispielsweise kann die Führung hierzu entsprechende Anschläge aufweisen (die vorzugsweise durch das bzw. die genannten Langlöcher gebildet werden).

Vorteile bringt es zudem mit sich, wenn der Träger eine Auffangfläche umfasst zum Auffangen von Siebgut, das vom Siebrost herunterfällt, während die Reinigungsharke den Siebrost passiert. Die Auffangfläche kann beispielsweise durch ein Blech der Reinigungsharke gebildet sein, die sich in Breitenrichtung der Reinigungsharke erstreckt (d. h. in Richtung von einem ersten, mit dem ersten Zugorgan verbundenen, Seitenabschnitt zu einem zweiten, mit dem zweiten Zugorgan verbundenen, Seitenabschnitt). Zudem sollte die Auffangfläche derart ausgerichtet sein, dass sie vorhandene Befestigungsmittel, mit der die Reinigungszinken (bzw. der Reinigungskamm) mit dem Träger verbunden sind, nach oben hin überdeckt, wenn die Reinigungsharke an der Siebfläche vorbeigeführt wird. Die Befestigungsmittel sind in diesem Fall vor mechanischer Belastung geschützt.

Auch ist es von Vorteil, wenn einzelne Reinigungszinken, bezogen auf den Siebrost, eine unterschiedliche Eingriffstiefe aufweisen, so dass sie beim Passieren des Siebrostes unterschiedlich tief zwischen die ihnen zugeordneten Roststäbe eingreifen. Vorzugsweise greift ein Teil der Reinigungszinken soweit zwischen die jeweiligen Roststäbe, dass der gesamte Zwischenraum zwischen den entsprechenden Roststäben gereinigt wird. Im Gegenzug können Reinigungszinken vorhanden sein, die nur ein Stück weit zwischen die ihnen zugeordneten Roststäbe eingreifen. Die auf die Reinigungsharke einwirkenden Kräfte sind in diesem Fall geringer, als wenn alle Reinigungszinken die ihnen zugeordneten Zwischenräume vollständig durchgreifen würden. Um jedoch stets alle Zwischenräume vollständig reinigen zu können, ist es von Vorteil, wenn mehrere Reinigungsharken vorhanden sind. Die an den jeweiligen Reinigungsharken vorhandenen Reinigungszinken sind in diesem Fall derart anzuordnen, dass sämtliche Zwischenräume nach und nach vollständig von Reinigungszinken zugegriffen werden.

Besonders vorteilhaft ist es daher, wenn zumindest der Großteil der Reinigungszinken mit geringer Eingriffstiefe jeweils zu wenigstens einem Reinigungszinken mit größerer Eingriffstiefe benachbart angeordnet ist. Beispielsweise könnten sich an jeder Reinigungsharke Reinigungszinken, die die Zwischenräume vollständig durchgreifen, mit Reinigungszinken abwechseln, die nur ein Stück weit in die Zwischenräume eingreifen. Auch wäre es denkbar, dass die Reinigungszinken mit großer Eingriffstiefe (d. h. die Reinigungszinken, die die von ihnen durchfahrenen Zwischenräume vollständig durchgreifen) und die Reinigungszinken mit geringerer Eingriffstiefe (d. h. die Reinigungszinken, die die von ihnen durchfahrenen Zwischenräume nicht vollständig durchgreifen) jeweils paarweise zueinander benachbart angeordnet sind.

Alternativ wäre es schließlich auch denkbar, dass alle Reinigungszinken dieselbe Eingriffstiefe aufweisen, um stets eine einheitliche Reinigung aller Zwischenräume zu bewirken.

Weitere Vorteile der Erfindung sind in den nachfolgenden Ausführungsbeispielen beschrieben. Es zeigen, jeweils schematisch:
- **Figur 1**: eine Seitenansicht einer erfindungsgemäßen Vorrichtung,
- **Figur 2**: eine Seitenansicht einer weiteren erfindungsgemäßen Vorrichtung,
- **Figur 3**: eine Draufsicht eines Ausschnitts einer bekannten Vorrichtung zum Abscheiden und Entfernen von Siebgut aus einer mit Siebgut verunreinigten strömenden Flüssigkeit,
- **Figur 4**: eine Seitenansicht (links) und eine Draufsicht (rechts) auf eine erfindungsgemäß ausgebildete Reinigungsharke einer erfindungsgemäßen Vorrichtung, und
- **Figur 5**: eine Unteransicht der in Figur 4 gezeigten Reinigungsharke.

Vorab sei erwähnt, dass in Figuren, die mehrere gleichartige Bauteile oder Abschnitte (wie beispielsweise Reinigungszinken 7) zeigen, teilweise nur eines oder zwei von mehreren gleichartigen Bauteilen bzw. Abschnitten mit Bezugszeichen versehen ist, um eine gute Übersichtlichkeit zu gewährleisten.

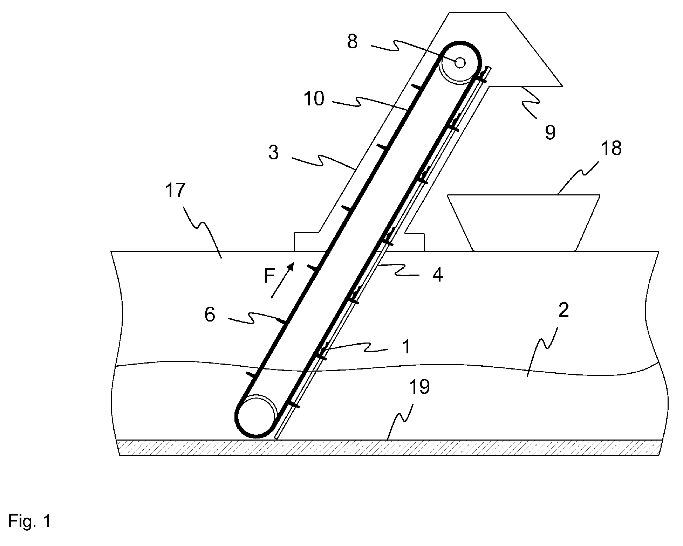

Figur 1 zeigt eine in einen Abwasserkanal 17 integrierte erfindungsgemäße Vorrichtung (Rechen) zum Abscheiden und Entfernen von Siebgut 1 (z. B. in Form von Steinen, Ästen, etc.). Die Vorrichtung weist einen schräg von oben in das Abwasser 2 hineinragenden Siebrost 4 auf, der durch nicht gezeigte Befestigungselemente mit der Kanalsohle 19 und/oder einem Gestell 3 der Vorrichtung verbunden ist.

Ferner weist die Vorrichtung zwei bezogen auf die Blattebene hintereinander angeordnete und voneinander beabstandete und mit Hilfe eines Antriebs 8 um den Siebrost 4 umlaufend bewegbare Zugorgane 10 (z. B. in Form von Umlaufketten) auf, die über mehrere dazwischenliegende Reinigungsharken 6 miteinander in Verbindung stehen (unter Umständen kann auch nur eine Reinigungsharke 6 ausreichend sein). Die Umlaufketten sind über seitliche Führungen in ihrer Bahn geführt, wobei die Führung im oberen und unteren Umlenkbereich, aber auch in den dazwischenliegenden Bereichen platziert sein kann, in denen die Zugorgane 10 parallel zueinander verlaufen.

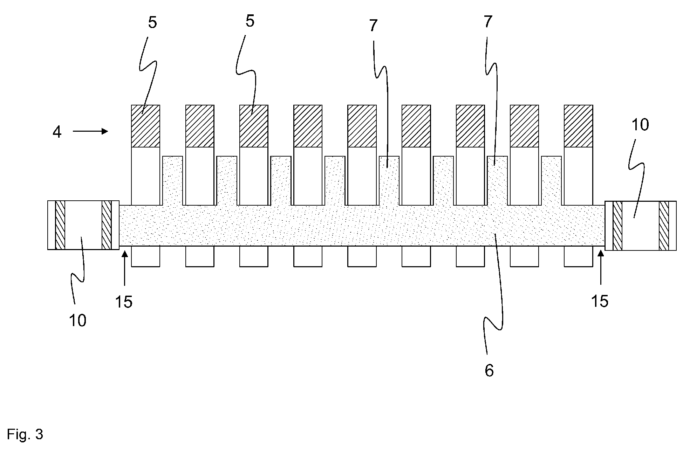

Die Reinigungsharke 6 umfasst wiederum eine Vielzahl von nebeneinander angeordneten Reinigungszinken, die in die Zwischenräume des Siebrosts 4 eingreifen, wenn sich die Reinigungsharke 6 durch Antreiben der Zugorgane 10 in Förderrichtung F (bezogen auf Figur 1 im Uhrzeigersinn) an der stromaufwärts gerichteten Vorderseite des Siebrosts 4 vorbeistreicht (vergleiche auch Figur 3; diese zeigt zwar eine herkömmliche Reinigungsharke 6, das Prinzip des Zusammenspiels von Roststäben 5 und Reinigungszinken 7 entspricht jedoch bis auf die fehlende seitliche Beweglichkeit der Reinigungszinken 7 dem Prinzip der erfindungsgemäßen Vorrichtung).

Das vom Siebrost 4 zurückgehaltene Siebgut 1 (die Abwasserströmung verläuft in Figur 1 von links nach rechts) wird schließlich von den Reinigungsharken 6 bzw. deren Reinigungszinken 7 erfasst und nach oben gefördert. Vor dem Passieren des oberen Wendepunkts gelangt es schließlich, eventuell über ein Leitblech, in den Bereich eines Austrags 9 und von dort nach außen, beispielsweise in einen Container 18. Die Reinigungsharke 6 wird schließlich wieder zum unteren Wendepunkte geführt, so dass der Kreislauf von vorne beginnen kann.

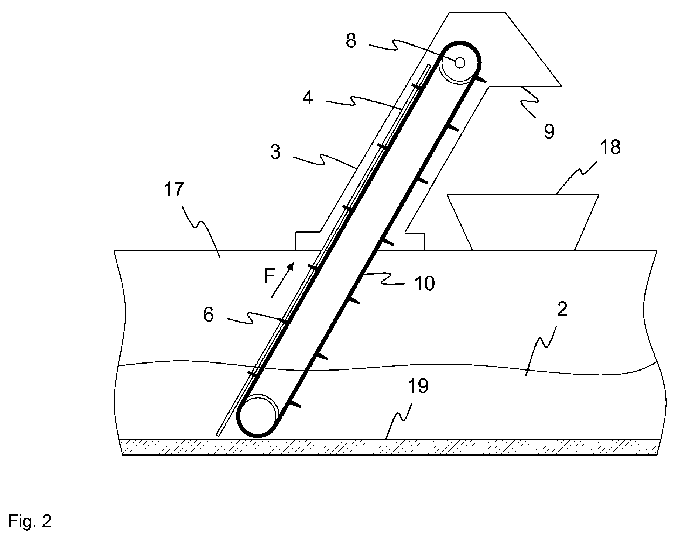

Wie Figur 2 zeigt, muss der Siebrost 4 nicht zwangsläufig von vorne (in Fließrichtung des Abwassers 2 gesehen) von den Reinigungsharken 6 durchkämmt werden. Ebenso ist die in Figur 2 gezeigte Ausführungsform denkbar, bei der die Roststäbe 5 "von hinten" durchkämmt werden. Die in den Figuren 1 und 2 gezeigten Ausführungsformen stellen somit lediglich mögliche Anwendungsfälle der Erfindung dar.

Wie nun Figur 3 zeigt, ist es für den Reinigungsvorgang des Rechenrosts notwendig, dass die Reinigungszinken den zwischen den Roststäben 5 vorhandenen Zwischenräumen folgen, um ohne Verkanten in diese eingreifen zu können. Im Stand der Technik (wie Figur 3 zeigt) ist es daher zwingend nötig, dass die Roststäbe 5 parallel zu den beiden beidseitig mit der Reinigungsharke 6 verbundenen Zugorganen 10 verlaufen, da der seitliche Abstand zwischen den Roststäben 5 und den Reinigungszinken 7 sehr gering ist und damit nur wenig Spiel zulässt.

Um nun einen verkantungsfreien Eingriff der Reinigungszinken 7 in die jeweiligen Zwischenräume zu gewährleisten, wird erfindungsgemäß vorgeschlagen, dass die Reinigungszinken 7 derart gelagert sind, dass sie in einer seitlichen Richtung relativ zu den Zugorganen 10 beweglich gelagert sind.

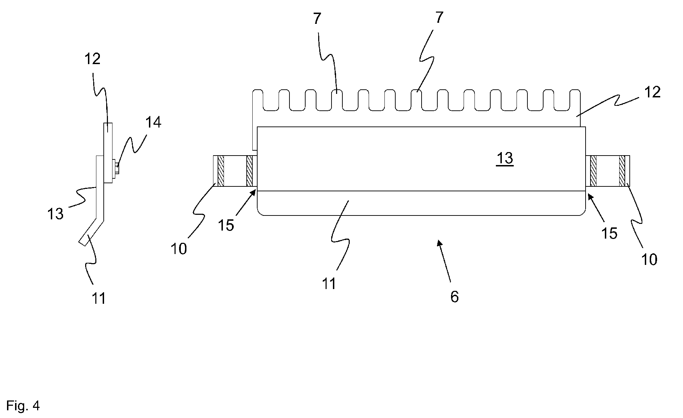

In Figur 4 ist nun eine mögliche Ausführung einer Reinigungsharke 6 gezeigt, die die gewünschte seitliche Bewegung der Reinigungszinken 7 ermöglicht ("seitlich" heißt mit Bezug auf die rechte Darstellung in Figur 4: nach links und rechts). Während die rechte Darstellung eine Draufsicht auf eine Reinigungsharke 6 zeigt, ist in der linken Darstellung eine entsprechende Seitenansicht zu sehen, wobei hier auf die Darstellung der Zugorgane 10 verzichtet wurde.

In jedem Fall zeigt die rechte Darstellung in Figur 4, dass die Reinigungszinken 7, die im gezeigten Beispiel durch einen einteiligen Reinigungskamm 12 gebildet sind, maximal nach links verschoben sind, wobei die Verschiebung relativ zu einem den Reinigungskamm 12 tragenden Träger 11 erfolgte (der wiederum im Bereich seiner Seitenabschnitte 15 unverschiebbar an den Zugorganen 10 gelagert ist). Ebenso könnte der Reinigungskamm 12 aufgrund seiner Lagerung am Träger 11 auch nach rechts verschoben werden, wobei er in diesem Fall so weit nach rechts über den Träger 11 hinausstehen würde, wie er in Figur 4 nach links über diesen hinausragt.

Mit anderen Worten kann der Reinigungskamm 12 also seitlich hin und her bewegt werden, um dem genauen Verlauf der Roststäbe 5, die nicht zwangsläufig exakt parallel zu den Zugorganen 10 ausgerichtet sind, folgen zu können.

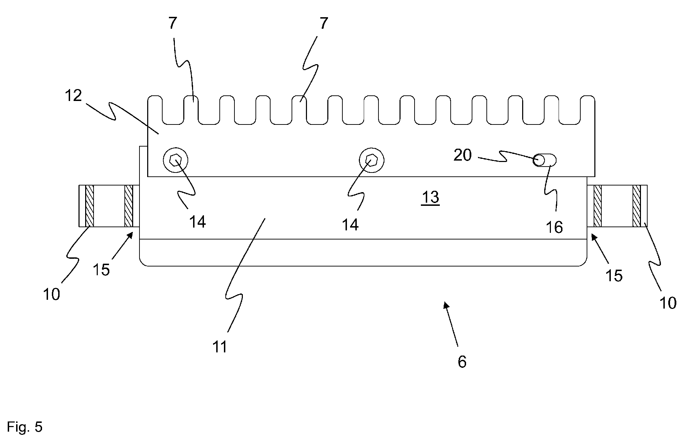

Schließlich zeigt Figur 5 (Unteransicht der in Figur 4 dargestellten Reinigungsharke 6) eine mögliche Lagerung des Reinigungskamms 12 am Träger 11. Beispielsweise wäre es denkbar, dass der Reinigungskamm 12 eine oder mehrerer Führungen 16 (z. B. in Form der gezeigten Langlöcher) aufweist, die von Befestigungsmitteln 14, vorzugsweise den gezeigten Schrauben, durchgriffen werden, wobei die Schrauben wiederum in entsprechende Innengewinde 20 des Trägers 11 eingreifen (für eine reibungslose Relativbewegung zwischen Träger 11 und Reinigungskamm 12 wäre es selbstverständlich von Vorteil, wenn in den Langlöchern von den Schrauben durchdrungene, nicht gezeigte, Abstandsringe vorhanden wären, um die Schrauben festziehen zu können, ohne den Reinigungskamm 12 hierbei klemmend zu fixieren). Im Übrigen sei mit Bezug zu Figur 5 darauf hingewiesen, dass eine ausschließlich rechts gezeigte Führung 16 (Langloch) auch unterhalb des linken und des in der Mitte gezeigten Befestigungsmittels 14 vorhanden ist. Ebenso ist im Bereich der rechts gezeigten Führung 16 im Betrieb der Vorrichtung selbstverständlich ebenso ein Befestigungsmittel 14 vorhanden (dies wurde in Figur 5 lediglich weggelassen, um einen Blick auf die Führung 16 zu gewährleisten).

In jedem Fall ist es von Vorteil, wenn der Träger 11 eine Auffangfläche 13 für Siebgut 1 umfasst, die die Befestigungsmittel 14 und auch die Führung 16 beim Passieren des Siebrostes 4 nach oben hin überdeckt, um eine übermäßige Verschmutzung bzw. mechanische Beanspruchung der Befestigungsmittel 14 bzw. der Führung 16 durch vorbeistreichendes Siebgut 1 zu verhindern.

Abschließend sei darauf hingewiesen, dass die in den Figuren 4 und 5 gezeigten Reinigungszinken 7 unterschiedliche Eingriffstiefen aufweisen können (die Eingriffstiefe ist die Tiefe, mit der die Reinigungszinken 7 in die Zwischenräume zwischen den Roststäben 5 eingreifen). Beispielsweise wäre es denkbar, dass sich längere Reinigungszinken 7 (also Reinigungszinken 7 mit größerer Eingriffstiefe) mit kürzeren Reinigungszinken 7 (also Reinigungszinken 7 mit geringerer Eingriffstiefe) abwechseln. Ebenso könnten sich jeweils zwei nebeneinander angeordnete längere Reinigungszinken 7 mit jeweils zwei nebeneinander angeordneten kürzeren Reinigungszinken 7 abwechseln.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind.

### Bezugszeichenliste

- 1: Siebgut
- 2: Abwasser
- 3: Gestell
- 4: Siebrost
- 5: Roststäbe
- 6: Reinigungsharke
- 7: Reinigungszinken
- 8: Antrieb
- 9: Austrag
- 10: Zugorgan
- 11: Träger
- 12: Reinigungskamm
- 13: Auffangfläche
- 14: Befestigungsmittel
- 15: Seitenabschnitt des Trägers
- 16: Führung
- 17: Abwasserkanal
- 18: Container
- 19: Kanalsohle
- 20: Innengewinde

- F: Förderrichtung

## Patentansprüche

1. Vorrichtung zum Abscheiden und Entfernen von Siebgut (1) aus einer mit Siebgut (1) verunreinigten strömenden Flüssigkeit, beispielsweise Abwasser (2),
- wobei die Vorrichtung einen an einem Gestell (3) fixierten und eine Siebfläche bildenden Siebrost (4) mit nebeneinander angeordneten und voneinander beabstandeten Roststäben (5) aufweist,
- wobei die Vorrichtung zumindest eine Reinigungsharke (6) mit einer Vielzahl von Reinigungszinken (7) umfasst, die mit Hilfe eines Antriebs (8) derart in einer Förderrichtung (F) entlang des Siebrosts (4) bewegbar ist, dass die Reinigungszinken (7) beim Passieren des Siebrosts (4) zumindest abschnittsweise zwischen benachbarte Roststäbe (5) eingreifen, um vom Siebrost (4) zurückgehaltenes Siebgut (1) von diesem zu entfernen und in Richtung eines Austrags (9) der Vorrichtung zu fördern,
**dadurch gekennzeichnet,**
**dass** die Reinigungszinken (7) derart gelagert sind, dass sie bezogen auf die genannte Förderrichtung und mit Blick auf den Siebrost seitlich hin und her bewegbar sind.

2. Vorrichtung gemäß dem vorangegangenen Anspruch, **dadurch gekennzeichnet, dass** die Reinigungsharke (6) beidseitig mit jeweils einem umlaufenden Zugorgan (10), beispielsweise in Form einer Kette, in Verbindung steht und mit Hilfe der Zugorgane (10) entlang eines endlosen Förderwegs bewegbar ist.

3. Vorrichtung gemäß einem der vorangegangenen Ansprüche, **dadurch gekennzeichnet, dass** die Reinigungszinken (7) derart gelagert sind, dass sie wenigstens 0,5 mm, bevorzugt wenigstens 1 mm, besonders bevorzugt wenigstens 2 mm, seitlich bewegbar sind.

4. Vorrichtung gemäß einem der vorangegangenen Ansprüche, **dadurch gekennzeichnet, dass** die Reinigungsharke (6) einen Träger (11) umfasst, der mit dem Antrieb (8) in Wirkverbindung steht und von diesem bewegbar ist, wobei die Reinigungszinken (7) derart am Träger (11) gelagert sind, dass sie relativ zum Träger (11) bewegbar sind.

5. Vorrichtung gemäß dem vorangegangenen Anspruch, **dadurch gekennzeichnet, dass** die Reinigungszinken (7) bezogen auf den Träger (11), vorzugsweise ausschließlich, linear beweglich gelagert sind.

6. Vorrichtung gemäß Anspruch 4 oder 5, **dadurch gekennzeichnet, dass** sich der Träger (11) zwischen zwei parallel verlaufenden Zugorganen (10) erstreckt und zwei voneinander beabstandete Seitenabschnitte (15) aufweist, wobei jeweils ein Seitenabschnitt (15) mit einem Zugorgan (10) in Verbindung steht.

7. Vorrichtung gemäß einem der Ansprüche 4 bis 6, **dadurch gekennzeichnet, dass** die Reinigungsharke (6) wenigstens einen, mehrere Reinigungszinken (7) umfassenden, vorzugsweise einteiligen und/oder aus Kunststoff gefertigten, Reinigungskamm (12) aufweist, wobei der Reinigungskamm (12) derart am Träger (11) gelagert ist, dass er relativ zum Träger (11) bewegbar ist.

8. Vorrichtung gemäß dem vorangegangenen Anspruch, dadurch ge-kennzeichnet, dass der Reinigungskamm (12) mit Hilfe von Befestigungsmitteln (14) lösbar am Träger (11) befestigt ist.

9. Vorrichtung gemäß einem der Ansprüche 4 bis 8, **dadurch gekennzeichnet, dass** der Träger (11) und/oder der Reinigungskamm (12) eine oder mehrere Führungen (16) umfassen, die sicherstellen, dass zwischen Reinigungskamm (12) und Träger (11) ausschließlich eine geradlinige und, bezogen auf die Förderrichtung (F), seitliche Relativbewegung möglich ist.

10. Vorrichtung gemäß einem der Ansprüche 4 bis 9, **dadurch gekennzeichnet, dass** der Träger (11) eine Auffangfläche (13) umfasst zum Auffangen von Siebgut (1), das vom Siebrost (4) herunterfällt, während die Reinigungsharke (6) den Siebrost (4) passiert, wobei die Reinigungszinken (7) über Befestigungsmittel (14) mit dem Träger (11) verbunden sind, und wobei die Befestigungsmittel (14) derart platziert sind, dass sie beim Passieren der Siebfläche unterhalb der Auffangfläche (13) angeordnet sind.

11. Vorrichtung gemäß einem der vorangegangenen Ansprüche, **dadurch gekennzeichnet, dass** einzelne Reinigungszinken (7), bezogen auf den Siebrost (4), eine unterschiedliche Eingriffstiefe aufweisen, so dass sie beim Passieren des Siebrostes (4) unterschiedlich tief zwischen die ihnen zugeordneten Roststäbe (5) eingreifen.

12. Vorrichtung gemäß dem vorangegangenen Anspruch, **dadurch gekennzeichnet, dass** zumindest der Großteil der Reinigungszinken (7) mit geringer Eingriffstiefe jeweils zu wenigstens einem Reinigungszinken (7) mit größerer Eingriffstiefe benachbart angeordnet ist.
